Europäisches Patentamt

European Patent Office

Office européen des brevets

(11) Publication number: 0 451 639 A2

# EUROPEAN PATENT APPLICATION

(21) Application number: 91105023.5

(51) Int. Cl.5: G06F 9/26

(22) Date of filing: 28.03.91

(30) Priority: 29.03.90 JP 78810/90

(43) Date of publication of application:
16.10.91 Bulletin 91/42

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Otaguro, Yukio
525 Mizonokuchi, Takatsu-ku
Kawasaki-shi, Kanagawa-ken(JP)

(74) Representative: Lehn, Werner, Dipl.-Ing. et al
Hoffmann, Eitle & Partner Patentanwälte
Arabellastrasse 4
W-8000 München 81(DE)

(54) Microprogram control unit.

(57) A microprogram control unit comprises a detecting section (13) for detecting a plurality of types of interrupt factors occurring in the processor in a plurality of interrupt factor detecting circuits (13) thereof,a plurality of interrupt factor holding registers (14) for holding detecting signals transmitted from the detecting section (13), a highest priority interrupt factor decision section (101) for deciding a specific interrupt factor which has the highest priority among the interrupt factors corresponding to the detecting signals held in the registers (l4), a micro address assigning section (102) for assigning an interrupt microprogram address to the specific interrupt factor determined in the highest priority interrupt factor decision section,and an information memory section (104 to l08) for storing a plurality of types of processor control information for processing interrupt factors detected in the detecting section (13) and providing specific information for processing the specific interrupt factor determined in the decision section after receiving the interrupt microprogram address assigned in the assigning section (l02).

FIG.6

EP 0 451 639 A2

## BACKGROUND OF THE INVENTION

### 1. Field of the Invention

The present invention relates to a unit for processing interrupt factors and controlling a sequence of microprograms in a processor, and in particular to a control unit for processing a large amount of information.

### 2. Description of Background Art

Recently, a sequence control method is utilized in a processor memorizing a large amount of microprogram. Specifically, the method is as follows. The microprogram is sequentially read out from a microprogram read only memory ( $\mu$ROM ) in which a large amount of information for controlling the processor is stored. Thereafter, the process in the processor is controlled so that the sequential process is carried out.

Normally, the microprogram is sequentially read out under the control of instructions provided from the $\mu$ROM so that the sequential process is carried out. However, when an unexpected event such as a processing error occurs, it is necessary to interrupt the microprogram so that the occurrence of an interrupt factor is informed to the $\mu$ROM before carrying out the process corresponding to the interrupt factor.

The interrupt factor is for example an incorrect instruction code which has occurred when an indefinite instruction code is read into a central processing unit ( CPU ), an address translation exception which has occurred when an address translation is carried out in spite of no page being present, a debug exception which has occurred when an address match occurs in a debugging operation, an operand read error exception which has occurred when a bus error occurs in an operand read operation, an operand write exception which has occurred when a bus error occurs in an operand write operation, and an external interrupt which has occurred when an interrupt is required from outside of the CPU.

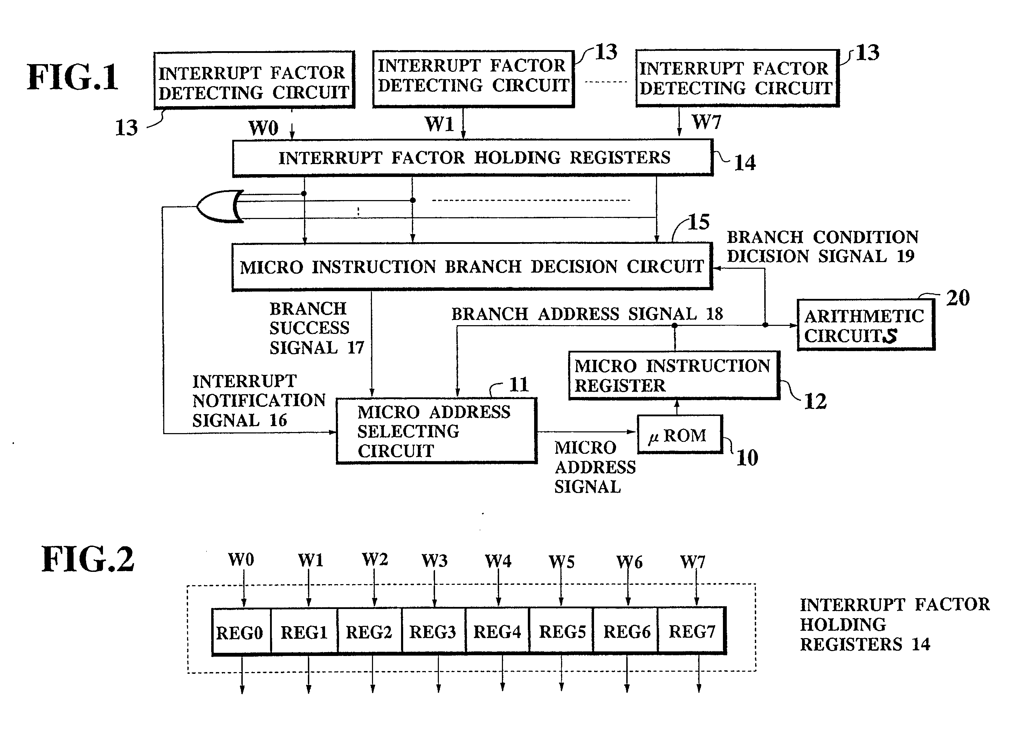

Fig. 1 is a block diagram showing a principle structure to explain a conventional microprogram control unit.

The conventional microprogram control unit for controlling a processor comprises

a $\mu$ROM 10 for storing information for each micro address to control the processor;

a micro address selecting circuit 11 for selecting a prescribed micro address of the $\mu$ROM 10 in which an internal prescribed information is stored;

a micro instruction register 12 for registering the information stored in the micro address selected by the selecting circuit 11 before providing a branch address signal 18 to the circuit 11 and providing the information to arithmetic circuits 20 for controlling the processor, the branch address signal 18 indicating a branch operation to an address in which a program for processing an interrupt factor occurring in the processor is stored in the $\mu$ROM 10;

a plurality of interrupt factor detecting circuits 13 for detecting at least one type of interrupt factor when the interrupt factor occurs in the processor, one circuit 13 detecting a corresponding interrupt factor;

a group of interrupt factor holding registers 14 for holding "0" level detecting signals transmitted from the detecting circuits 13 in which corresponding interrupt factors are not detected or holding "l" level detecting signals transmitted from other detecting circuit 13 in which the corresponding interrupt factor is detected, one register 14 detecting a corresponding detecting signal; and

a micro instruction branch decision circuit 15 for receiving branch condition decision signals 19 from the micro instruction register 12 one by one to decide a specific register 14 in which the "1" level detecting signal is registered, one detecting signal 19 corresponding to one holding register 14 and the decision circuit 15 providing a branch success signal 17 to the selecting circuit 11 when one decision signal 19 corresponding to the specific register 14 is provided.

In the above structure, normally, a micro instruction is read out from the $\mu$ROM 10 according to a micro address signal provided from the selecting circuit 11 and stored in the micro instructing register 12 before the processing in the processor is controlled by the stored micro instruction. However, when an interrupt factor resulting from processing error occurs, a "1" level detecting signal detected in the corresponding detecting circuit 13 is provided to a register 14 corresponding to the interrupt factor which has occurred. When the "1" level signal is provided to at least one register 14, an interrupt notification signal 16 notifying the occurrence of the interrupt factor is provided to the micro address selecting circuit 11 through an OR gate. Thereby, a micro address for processing the interrupt factor which has occurred is provided to the $\mu$ROM 10 from the micro address selecting circuit 11 so that a program for processing the interrupt factor is carried out.

In this case, a specific process for specifying the interrupt factor which has occurred is needed. Therefore, the type of interrupt factor which has occurred must be determined. Moreover, each interrupt factor must be processed one by one according to a priority predetermined for the interrupt factors when a plurality of interrupt factors occur simultaneously.

Now, the process for deciding the highest prior interrupt factor among the interrupt factors which have occurred is explained with reference to Fig. 1 as follows,

The decision as to the interrupt factor which has occurred is carried out in the micro instruction branch decision circuit 15 by determining the holding register 14 in which the "1" level signal is stored. That is, a micro address signal is provided to the μROM 10 from the micro address selecting circuit 11 to check the interrupt factor when an interrupt notification signal 16 is provided to the selecting circuit 11, thereby a micro instruction corresponding to the micro address signal is provided to the micro instruction register 12 from the μROM 10. A branch condition decision signal 19 is then provided to the micro instruction branch circuit 15 from the micro instruction register 12. At the same time, a branch address signal 18 for assigning the branch address for processing the corresponding interrupt factor is provided to the selecting circuit 11. In the branch address of the μROM 10, information for processing the corresponding interrupt factor is stored.

The branch condition decision signal 19 is provided to each of the registers 14 according to the order of priority to determine whether a detecting signal registered in a corresponding register 14 is "1" level or not. That is, when the detecting signal is "0" level, a "0" level branch success signal 17 is provided to the micro address selecting circuit 11. At the same time, a new micro address signal designating the next micro address is provided to the μROM 10 from the selecting circuit 11 to provide a new branch condition decision signal 19 to the decision circuit 15 and to provide a new branch address signal 18 to the selecting circuit 11. The new signal 19 corresponds to the next register 14.

On the other hand, when the detecting signal designated by the branch condition decision signal 19 provided from the micro instruction register 12 is the "I" level, the branch success signal 17 is changed to the "I" level in the decision circuit 15 and provided to the micro address selecting circuit 11. When the branch success signal 17 at the "I" level is provided to the micro address selecting circuit 11, a micro address designated by the branch address signal 18 provided from the micro instruction register 12 is selected in the micro address selecting circuit 11 and transmitted to the μROM 10 so that the information stored in the micro address of the μROM 10 is provided to the arithmetic circuits 20 through the micro instruction register 12 to control the processor.

Fig. 2 shows the structure of the interrupt holding registers 14 in detail.

As shown in Fig. 2, eight registers REG0 to REG 7 are provided as the interrupt holding registers 14. Each detecting signal W0 to W7 signifies the detection or non-detection of an interrupt factor in the holding registers 14. For example, the detecting signal W0 is stored in a REG 0, the detecting signal W1 is stored in a REG 1, and so forth. The order of priority in this example is as follows.

W0 > W1 > W2 > W3 >***** > W7

That is, the highest priority interrupt factor is W0 and the lowest priority interrupt factor is W7.

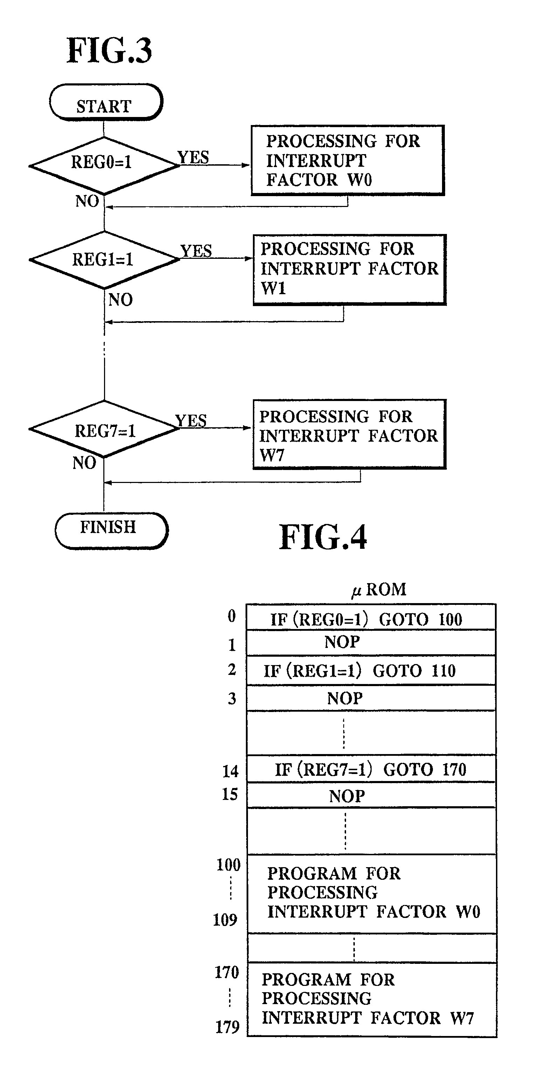

Fig. 3 is a flowchart showing procedure for determining the highest priority interrupt factor among the interrupt factors which have occurred in the microprogram control unit shown in Fig. 1. A process corresponding to the interrupt factor W0 is carried out when the REG 0 of the interrupt holding registers 14 is at the "I" level. Then, the procedure proceeds to REG 1 to check the interrupt factor W1. A process corresponding to the interrupt factor W1 is carried out when the REG 1 is at the "I" level. Similarly, interrupt factors are checked in turn from the highest priority interrupt factor.

Fig. 4 shows micro programs stored in the μROM l0. These microprograms are executed according to the flowchart shown in Fig. 3. For example, whether the REG 0 is at the "1" level or not is judged, thereby a branch operation to the address "l00" designated by the branch address signal is carried out if the REG 0 is at the "1" level. Microprograms for processing the interrupt factor W0 are stored in the address "100", thereby those microprograms are read out from the μROM 10 to the arithmetic circuits 20 to process the interrupt factor W0.

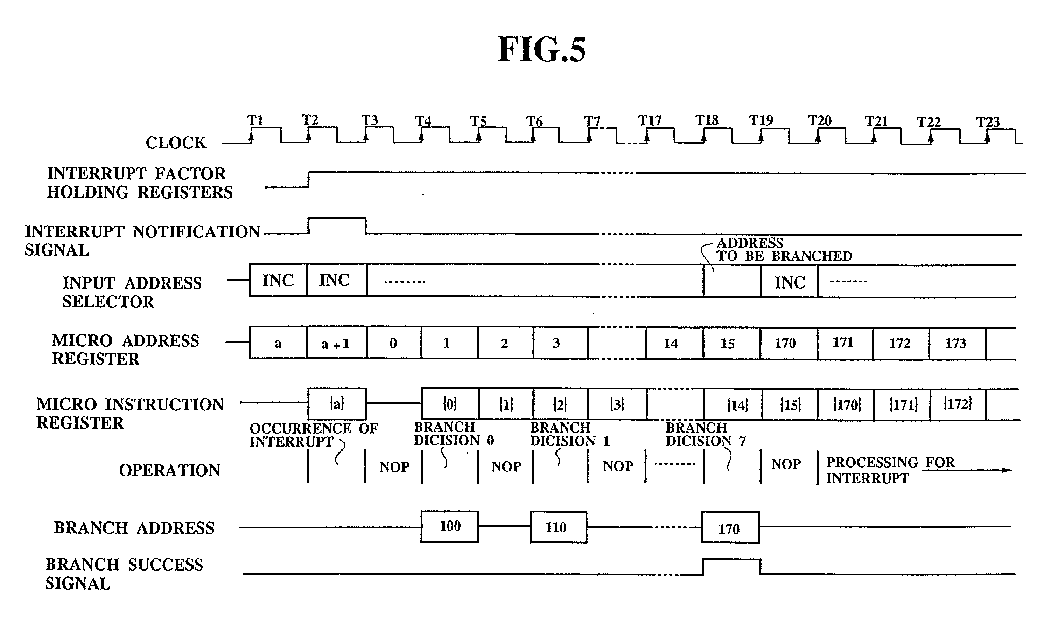

Fig. 5 is a timing chart to show an interrupt handling process by using the conventional microprogram control unit shown in Fig. 1.

In this example shown in Fig. 5, only the REG 7 registering the interrupt factor W7 at the lowest priority is at the "I" level. That is,

REG 0 = REG 1 = *** REG 6 = 0, REG 7 = 1

When the REG 7 in the interrupt holding registers 14 is set to the "1" level at a clock cycle T2, the micro address register in the micro address selecting circuit 1l is forced to the "0" level by receiving an interrupt notification signal 16 at a next clock cycle T3. Thereafter, the micro address signal is provided to the μROM 10 from the micro address selecting circuit 11, thereby a micro instruction {0} stored in the address "0" of the μROM 10 is written into the micro instruction register 12 at a clock cycle T4. In the same clock cycle, a branch condition decision signal 19 in the micro instruction is transmitted to the micro instruction branch decision circuit 15 from the micro instruction register 12 to check whether the REG 0 in the interrupt holding registers 14 is "1" or not. At the same time, a branch address signal 18 designating an address "100" in which a program for processing the interrupt factor W0 is stored is provided to the selecting circuit 11 from the micro instruction register 12. However, the branch address designated by the branch address signal 18 is not selected in the selecting circuit 11 because a "0" level branch success signal 17 is provided to the selecting circuit 11. This means that the programs for processing the interrupt factor W0 are not executed.

Similarly, the REG 1 to REG 6 are checked between a clock cycle T5 and a clock cycle T17 respectively. Thereafter, a micro instruction {14} stored in the address "14" of the $\mu$ROM 10 is written into the micro instruction register 12 at a clock cycle Tl8. Then, whether the REG 7 in the interrupt holding registers 14 is "1" or not is checked in the micro instruction branch decision circuit 15. Because the REG 7 is "l", the branch success signal 17 is changed to the "1" level and provided to the selecting circuit 11 so that the branch address signal 18 designating an address "l70" in which a program for processing the interrupt factor W7 is stored is selected and stored into the micro address register of the selecting circuit 11. Accordingly, the address "l70" to be branched is selected by an input address selector in the selecting circuit 11 to be registered into the micro address register in the selecting circuit 11 at a next clock cycle T19. Thereafter, a program {170} for processing the interrupt factor W7 is provided from the $\mu$ROM 10 into the micro instruction register 12 at a clock cycle T20 for controlling the processor.

As illustrated in Fig 5, the program {170} for processing the interrupt factor W7 which has occurred at the clock cycle T2 is executed at the clock cycle T20. In short, it takes 18 clock cycles to start the interrupt handling.

In the conventional art shown in Fig.1 to Fig. 5, it takes a long time to process an interrupt factor which has occurred because the interrupt factors are checked one by one. The reason why the processing time is increased is as follows.

First, as the priority for processing the interrupt factors is lower, the interrupt factors occurs more frequent. However, as shown in Fig. 3, as the priority for processing the interrupt factors is lower, the order for processing those factors is latter.

Secondly, as the structure of the processor is more complicated, a number of occurring interrupt factors increases. That is, an increase in the type of interrupt factors causes an increase in the time for checking the interrupt factors.

Therefore, a decrease in the interrupt handling performance occurs in the conventional microprogram control unit. The decrease in the interrupt handling performance means that the speed of the response to the external events which occur asynchronously is lowered. That is, it is particularly disadvantageous to use a micro processor for the real time control.

## SUMMARY OF THE INVENTION

The present invention is made to solve the problem of the prior art, and provides a microprogram control unit in which the performance for processing the interrupt factors and the real time control in the micro processor are advanced.

To achieve the above object, according to the present invention, a microprogram control unit for providing a processor control information for processing interrupt factors occurring in a processor, comprising:

a detecting section (l3) for detecting a plurality of types of interrupt factors occurring in the processor in a plurality of interrupt factor detecting circuits (13) thereof, each interrupt factor detecting circuit (l3) corresponding to one type of interrupt factor;

a plurality of interrupt factor holding registers (14) for holding detecting signals transmitted from the detecting section (13), each register (14) holding one detecting signal transmitted from the corresponding interrupt factor detecting circuit (13) in the detecting section (l3):

a highest priority interrupt factor decision section (10l) for deciding a specific interrupt factor which has the highest priority among the interrupt factors corresponding to the detecting signals held in the registers (14), the order of priority in the interrupt factors being defined in the decision section (101) in advance;

a micro address assigning section (102) for assigning an interrupt microprogram address to the specific interrupt factor determined in the highest priority interrupt factor decision section (101), each interrupt microprogram address being defined in advance corresponding to one interrupt factor; and

an information memory section (104 to 108) for storing a plurality of types of processor control information for processing interrupt factors detected in the detecting section (13) and providing specific information for processing the specific interrupt factor determined in the decision section after receiving the interrupt microprogram address assigned in the assigning section (l02).

In the above structure of the microprogram control unit according to the present invention, when at least one interrupt factor which has occurred is detected in one interrupt factor detecting circuit (13) of the detecting section (13), at least one detecting signal provided from one detecting circuit (l3) is held in the interrupt factor holding register (14). Thereby, at least one detecting signal is transmitted to the highest priority interrupt factor decision section (101) to determine a specific interrupt factor which has the highest priority among the interrupt factors which have occurred. In the highest prior interrupt factor decision section (101), the order of priority for the interrupt factors detected in the detecting section (13) is decided in advance. Therefore, the specific interrupt factor is immediately determined in the highest priority interrupt factor decision section (10I). Thereafter, the first priority interrupt factor is assigned an interrupt micro address in the assigning section (102) to be transmitted to the information memory section (104 to I08)

It is preferable that the information memory section (I04 to 108) includes:

a control storage (105) for storing a plurality of types of processor control information for processing interrupt factors detected in the detecting section (13) and a plurality of types of micro instruction, each piece of information corresponding to one micro instruction;

a micro address selecting section (I04) for

(1) selecting the interrupt microprogram address assigned in the micro address assigning section (102) in the first selecting operation and

(2) providing the interrupt microprogram address to the control storage (105) so that a micro instruction instructing the selecting section (I04) to select a branch address in the second selecting operation is read out from the control storage (105), the branch address designating a specific micro address in which the specific information is stored in the control storage (105); and

a micro instruction register (106) for

(1) providing the branch address to the micro address selecting section (104) after receiving the micro instruction from the control storage (105) and

(2) registering the specific information read out from the control storage (105) after having selected the branch address in the selecting section (104) to provide a branch address designating signal which designates the specific information stored in the branch address, the specific information registered in the micro instruction register (106) provided to the outside for controlling the processor.

In the above structure of the microprogram control unit according to the present invention, the interrupt micro address transmitted to the information memory section (I04 to 108) is selected in the selecting section (104). Then, the selected interrupt micro address is provided to the control storage (105) to read out a micro instruction for instructing the program to branch to a branch address in which an item of processor control information for processing the specific interrupt factor decided in the decision section (101) is stored. Therefore, the branch address is provided to the selecting section from the micro instruction register (106) which receives the micro instruction so that a branch address designating signal is provided to the control storage (105) to read out the processor control information.

The processor control information read out from the control storage (105) is transmitted out of the micro control unit through the micro instruction register (106) for controlling the processor.

Accordingly, in the conventional microprogram control unit, many clock cycles are needed for transmitting each interrupt factor in the selecting section (104), the control storage (105), the micro instruction register (106), and the decision circuit. However, in the present invention, a specific interrupt factor which has the highest priority among the interrupt factors which have occurred is decided in one clock cycle in the highest priority interrupt factor decision section (I0I). Therefore, the performance for processing the interruption is largely improved.

BRIEF DESCRIPTION OF THE DRAWINGS

Fig. 1 is a block diagram showing a conventional microprogram control unit.

Fig. 2 shows a structure of an interrupt factor holding registers shown in Fig. 1.

Fig. 3 is a flowchart showing the procedure for processing the interrupt factors in the control unit shown in Fig. 1.

Fig. 4 shows programs for processing the interrupt factors stored in the $\mu$ROM of the control unit shown in Fig. 1.

Fig. 5 is a timing chart for processing the interrupt factor in the control unit shown in Fig. 1.

Fig. 6 is a block diagram showing one embodiment of a microprogram control unit according to the present invention.

Fig. 7 is a first modification of a micro address generating circuit for processing 16 types of interrupt factors in comparison with a micro address generating circuit for processing 8 types of interrupt factors shown in Fig. 6.

Fig. 8 shows the relation between 16 kinds of input and 5 bits output in the micro address generating circuit shown in Fig. 6.

Fig. 9 shows the relation between the interrupt factors and the interrupt addresses assigned in a micro address assigning circuit in the control unit shown in Fig. 6.

Fig. 10 is a block diagram of a micro address selecting & registering section shown in Fig. 6.

Fig. 11 shows information for processing the interrupt factors stored in the $\mu$ROM of the control unit shown in Fig. 6.

Fig. 12 is a flowchart showing the procedure for processing 8 types of interruption factors in the control unit shown in Fig. 6.

Fig. 13 is a timing chart for processing an interrupt factor which has occurred in the control unit shown in Fig. 6.

Fig. 14 is a block diagram of a micro address generating circuit in the microprogram control unit according to the present invention, showing a second modification.

Fig. 15 shows micro addresses assigned in the micro address assigning circuit of the micro address generating circuit shown in Fig. 14.

## DESCRIPTION OF THE SPECIFIC EMBODIMENT

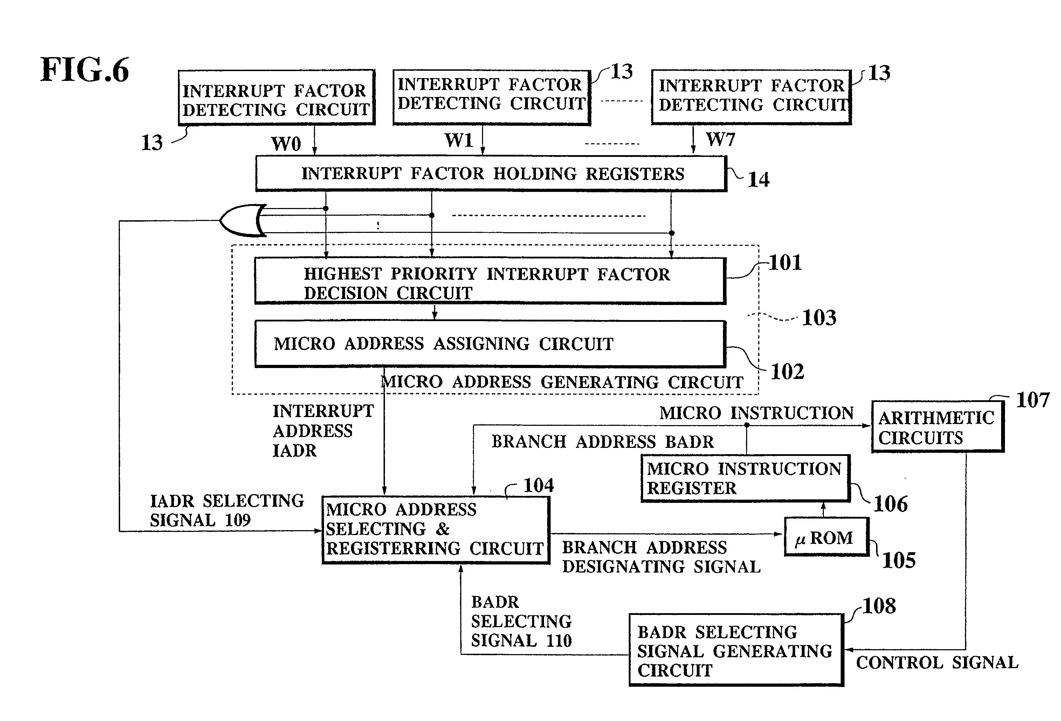

A preferred embodiment is described with reference to Fig. 6 to Fig. 15.

Fig. 6 is a block diagram showing one embodiment of a microprogram control unit according to the present invention.

As shown in Fig. 6, a microprogram control unit for providing processor control information for processing interrupt factors which have occurred in a processor and processing the interrupt factors is provided with;

a plurality of interrupt factor detecting circuits 13 for detecting a plurality of types of interrupt factors which have occurred, each interrupt factor detecting circuit 13 corresponding to one interrupt factor; and

a plurality of interrupt factor holding registers 14 for holding detecting signals and non-detecting signals W0 to W7 transmitted from the interrupt factor detecting circuits 13, each register 14 holding a detecting signal or a non-detecting signal transmitted from the corresponding interrupt factor detecting circuit 13;

The circuits 13 and the registers 14 are the same as in the conventional microprogram control unit.

The microprogram control unit according to this invention is also provided with;

a highest priority interrupt factor decision circuit 101 for determining the highest priority interrupt factor held in the registers 14 with the order of priority of the interrupt factors defined in the decision circuit 101 in advance; and

a micro address assigning circuit 102 for assigning an interrupt micro address IADR to the highest priority interrupt factor decided in the highest priority interrupt factor decision circuit.

Each interrupt micro address IADR is assigned to an interrupt factor defined in advance in the circuits 101, 102 constituting a micro address generating circuit 103.

Moreover, the microprogram control unit is provided with;

a micro address selecting & registering circuit 104 for selecting and registering the interrupt micro address IADR assigned in the micro address assigning circuit 102;

a μROM 105 for

(1) receiving the interrupt micro address IADR registered in the micro address selecting & registering circuit 104 and

(2) outputting a micro instruction signal to instruct a branch operation to a branch address in which the processor control information for processing the highest priority interrupt factor determined in the decision circuit 101 is stored in advance;

a micro instruction register 106 for

(1) providing a branch address signal BADR designating the branch address to the micro address selecting & registering circuit 104 after receiving the micro instruction signal from tale μROM 105,

(2) registering the processor control information read out from the μROM 105 after the micro address selecting & registering circuit 104

   (a) has received the branch address signal BADR and

   (b) provides a branch address designating signal which designates the branch address to the μROM 105, and

(3) providing the processor control information registered in the micro instruction register 106 to arithmetic circuits 107 for controlling the processor; and

a BADR selecting signal generating circuit 108 for providing a BADR selecting signal 110 to the micro address selecting & registering circuit 104 after receiving a control signal from the micro instruction register 106 so that the branch address signal BADR provided from the micro instruction register 106 is registered in the micro address selecting & registering circuit 104.

In the above structure, as mentioned in the conventional microprogram control unit, when at least one interrupt factor has occurred, the interrupt factor is detected in the interrupt factor detecting circuit 13 corresponding to the interrupt factor which has occurred. Thereby, at least one "1" level detecting signal and the other "0" level detecting signals W0 to W7 are transmitted to the interrupt factor holding registers 14 from the interrupt factor detecting circuits 13. When the "1" level detecting signal W0 to W7 is registered in at least one register 14, an IADR selecting signal I09 is changed to the "1" level and provided to the micro address selecting circuit 104 so that the circuit 104 is placed on standby for selecting an interrupt address IADR provided from the micro address assigning circuit 102. At the same time, the "0" level detecting signals and at least one "1" level. detecting signal W0 to W7 are provided to the highest priority interrupt factor decision circuit 101 in the micro address generating circuit 103 for deciding the highest priority interrupt factor which has occurred and assigning an interrupt address IADR. The interrupt address IADR designates one address in which a micro instruction for instructing a branching operation to a micro address for reading out a program for processing the determined highest priority interrupt factor is stored.

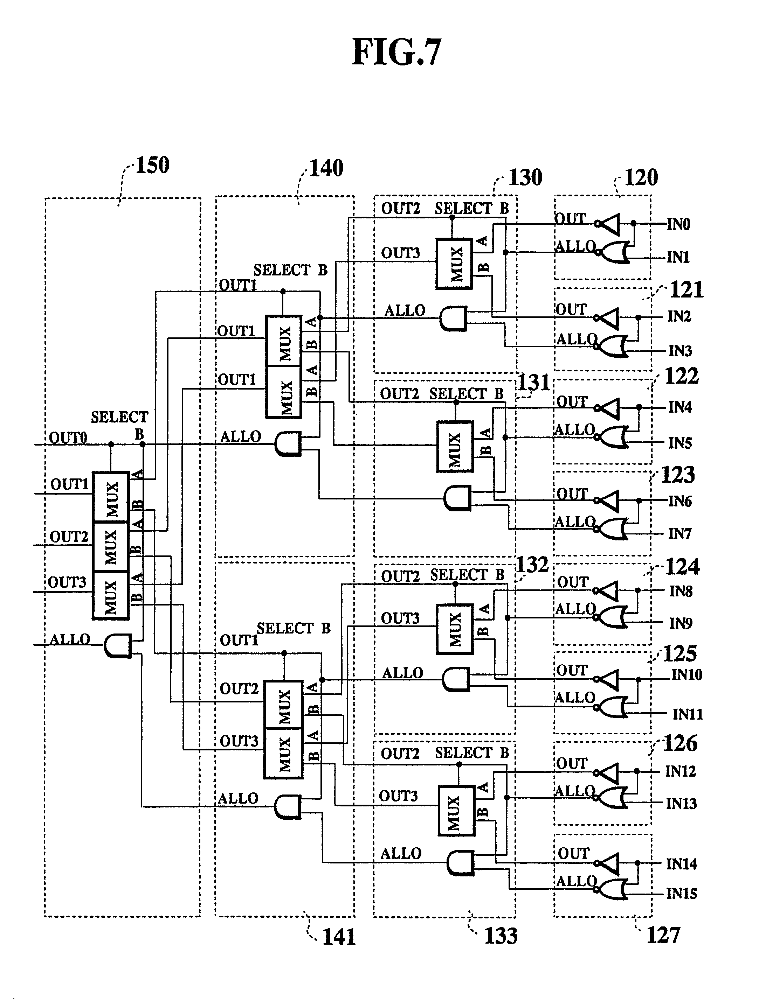

Next, the structure of the circuit 103 as shown in Fig. 7 is described as a first modification.

As shown in Fig. 7, the circuit 103 comprises a so-called priority encoder for receiving 16 types of interrupt factors and providing an interrupt address IADR, while the circuit 103 shown in Fig. 6 receives only 8 types of interrupt factors.

In this embodiment, the interrupt factor connected to an input IN0 has the highest priority and the interrupt factor connected to an input IN15 has the lowest priority. That is, the order of priority in the interrupt factors is as follows.
IN0 > IN1 > ***** > INI4 > IN15

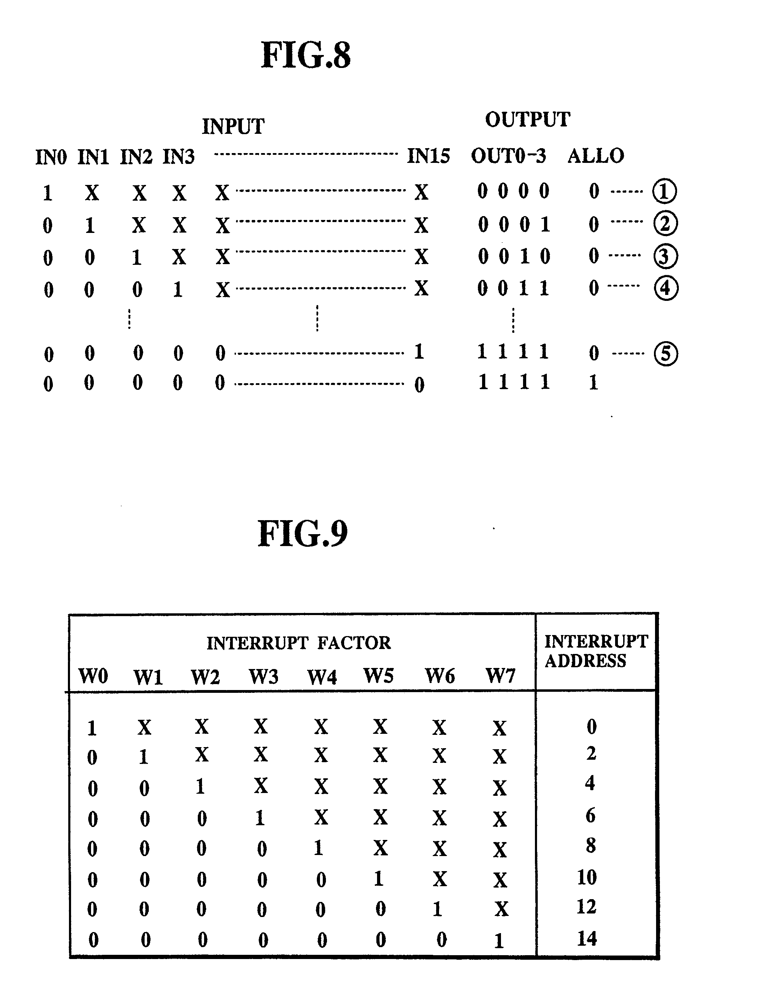

As shown in Fig. 8, outputs OUT0 to OUT3 designate a 4-bit signal provided from the highest priority interrupt factor, decision circuit 10I and the number of address designated by the 4-bit signal is identical with the number of inputs connected to the 16 types of interrupt factors.

The OUT3 is the least significant bit ( LSB ) and the OUT0 is the most significant bit( MSB ).

Also, outputs OUT0 to OUT3 and an ALL0 designate a 5-bit signal provided from the micro address assigning circuit I02.

For example, when the highest priority interrupt factor is the input IN0, an micro address "0000" corresponding to the interrupt factor provided to the input IN0 is output regardless of the condition of the other inputs. When the input IN0 is "0" and the input IN1 is "I", a micro address "0001" corresponding to the interrupt factor provided to the input IN1 is output regardless of the condition of the other inputs. When the all inputs IN0 to IN 15 are "0", the output ALL0 is "1". In other words, no interrupt factor is occurred.

Turning to Fig. 7, the operation in the circuit 103 is described as follows.

A cell 120 in the first stage is a priority encoder having 2 inputs and 2 outputs. When the input IN0 is "I", an output OUT becomes "0". When the input IN0 is "0" and the input IN1 is "I", the output OUT becomes "I". When the inputs IN0. IN1 are both "0", an output ALL0 becomes "I". In other words, When a 2-bit input constituted by the inputs IN0. IN1 is "I0" or "II", the output OUT becomes "0". When the 2-bit input is "0I", the

output OUT becomes "I". When the 2-bit input is "00", the output OUT is invalid.

Also, cells 121 to I27 have 2 inputs and 2 outputs respectively, operated in the same manner as the cell 120.

Accordingly, the output OUT of one cell in the cells 120 to I27 is selected finally and provided to the output OUT3 in a cell 150. In other words, the output OUT3 signifies that the bit number of the highest priority input at the "1" is even (for inputs IN0, IN2,--- ) or odd (for inputs IN1, IN3,--- ).

A cell 130 in the second stage receives the 4 outputs from the cell 120 and the cell 121 and provides the outputs OUT2, OUT3, and ALL0. A multiplexer MUX in the cell 130 selects the output OUT provided from the cell 121 when the output ALL0 provided from the cell 120 is "1". Also, the multiplexer MUX selects the output OUT from the cell 120 when the output ALL0 from the cell 120 is "0". The selected signal OUT is provided to the output OUT3. Also, when the output ALL0 from the cell 120 and the output ALL0 from the cell 121 are both "1", the output ALL0 of the cell I30 becomes "I". In the other case, the output ALL0 of the cell I30 becomes "0". Moreover, the output ALL0 of the cell 120 is provided to the output OUT2 of the cell 130.

In other words, the cell 130 selects one of the 2 OUTs of the cells 120, 121. When the input IN0 or the input INI is "1", the cell 130 selects the output OUT of the cell 120. In the other case, the cell 130 selects the output OUT of the cell 121 and provides it to the output OUT3. When the output ALL0 of the cell I20 is "1", the input IN0 and the input IN1 are both "0". Therefore, the output OUT of the cell 121 is selected and provided to the output OUT3. When the output ALL0 of the cell 120 is "0", either the input IN0 or the input INI is "1" at the first time. Therefore, the output OUT of the cell 120 is selected and provided to the output OUT3. Also, When the output ALL0 of the cell 120 and the ALL0 of the cell 121 is both "I", the ALL0 of the cell 130 becomes "I". This means that the highest priority bit at the "1" does not exist in the input IN0 to IN3. The output OUT2 of the cell 130 is the output ALL0 of the cell 120. The output OUT2 of the cell 130 means that the highest priority bit exists in the input IN2 or the input IN3 when the output OUT2 is "I". However, the output OUT2 of the cell 130 is invalid when the output ALL0 of the cell 130 is "I".

Also, cells 131 to 133 have 4 inputs and 3 outputs respectively, operated in the same manner as the cell 130.

A cell 140 in the third stage receives the 6 outputs from the cell I30 and the cell 131 and provides a bit signal to the outputs OUT1, OUT2 OUT3, and ALL0. In other words, the cell 140 is a 2-bit selector and selects one cell from the cells 130, 131 having 2 outputs OUT respectively. When the highest priority bit exists in the input IN0 to IN3 (that is, one of the input IN0 to IN3 is "1" ), the cell 140 selects the output OUTs of the cell 130. In the other case, the case 140 selects the output OUTs of the cell 131 and provides a bit signal to the outputs OUT1 to OUT3 and ALL0.

Also, a cell 141 has 6 inputs and 4 outputs, operated in the same manner as the cell 140.

A cell 150 in the forth stage receives the 8 outputs from the cell 140 and the cell 141 and provides a 5-bit signal to the outputs OUT0, OUT1, OUT2, OUT3, and ALL0. In other words, the cell 140 is a 3-bit selector and selects one cell from the cells 140, 141 having 3 OUTs respectively. When the highest priority bit exists in the input IN0 to IN7 (that is, one of the input IN0 to IN7 is "I" ), the cell 150 selects the output OUTs of the cell 140. In the other case, the cell 150 selects the output OUTs of the cell 141 and provides a 5-bit signal to the outputs OUT0 to OUT3 and ALL0.

A 4-bit output signal comprising the output OUT0 to OUT3 generates consecutive addresses from the number 0 to 15 in the highest priority interrupt factor decision circuit 101.

Accordingly, the micro address having the instruction for branching to the microprogram corresponding to the highest priority interrupt among the 16 types of interrupt factors can be generated immediately.

Also, by using the ALL0 as the lowest rank in a 5-bit output signal comprising the output OUT0 to OUT3 and ALL0, the 5-bit output signal generates every other address from the address "0" to "29" in the micro address assigning circuit 102. Therefore, the circuit shown in Fig. 7 is the micro address generating circuit 103 for processing the 16 types of interrupt factors. That is, the output of the so-called priority encoder for deciding the order of priority can be used as an interrupt address IADR for reading out a micro instruction for instructing the branch operation to the microprogram for processing the corresponding interrupt factor.

In the case of the micro address generating circuit 103 for processing the 8 types of interrupt factors as shown in Fig. 6, the output signal ( interrupt address IADR ) generates every other address from the number 0 to 15 as shown in Fig. 9.

In detail, when the highest priority interrupt factor among the interrupt factors which have occurred is W0, an address "0" is assigned as an interrupt address IADR in the micro address assigning section 102. Also, when the highest priority interrupt factor in the interrupt factors which have occurred is W5, an address "I0" is assigned as the interrupt address IADR.

In Fig. 9, a "1" designates the occurrence of an interrupt factor. A "0" designates the non-occurrence of an interrupt factor. An "X" designates "I" or "0", that is, "optional".

Next, as shown in Fig. I0, the micro address selecting & registering circuit 104 includes:

an input address selector 111 for selecting the interrupt micro address IADR provided from the address generating circuit 103 when the input address selector 111 receives the IADR selecting signal 100 indicating that at least one interrupt factor is detected in one interrupt factor detecting circuit 13 and selecting the branch address BADR provided from the micro instruction register 106 when the circuit II receives the BADR selecting signal 110 from the BADR selecting signal generating circuit 108;

a micro address register 112 for registering the interrupt address IADR or the branch address BADR selected in the input address selector 111: and

an incrementer 1I3 for incrementing the address value of each micro instruction signal provided by the register 112 to the $\mu$ROM 105 and providing an incremented address INCAD to the input address selector 111.

In the above structure of the micro address selecting & registering circuit 104, when no interrupt factor has occurred, the IADR selecting signal 109 and the BADR selecting signal 1I0 are both "0". Therefore, the input address selector 111 selects the incremented address INCAD and provides the address INCAD to the $\mu$ROM 105 through the micro address register 112 to read out the microprogram stored in the corresponding address of the $\mu$ROM 105 sequentially. Thereby, the microprogram read out from the $\mu$ROM 105 is transmitted to the arithmetic circuit 107 through the micro instruction register 106.

When no interrupt factor has occurred before a normal branching operation is carried out, a "I" level BADR selecting signal 1I0 is provided to the input address selector 111 so that the input address selector I11 selects the branch address signal BADR provided from the micro instruction register 106 to provide the selected signal BADR to the $\mu$ROM 105 through the micro address register 112. Therefore, a new microprogram is read out after carrying out the branching operation from the interrupt address IADR to the branch address BADR in the $\mu$ROM 105.

When at least one interrupt factor has occurred, a "1" level IADR selecting signal 109 is provided to the input address selector 111 so that the interrupt address IADR provided from the micro address assigning circuit 102 is selected in the selector 111 and provided to the $\mu$ROM 105 through the micro address register 112.

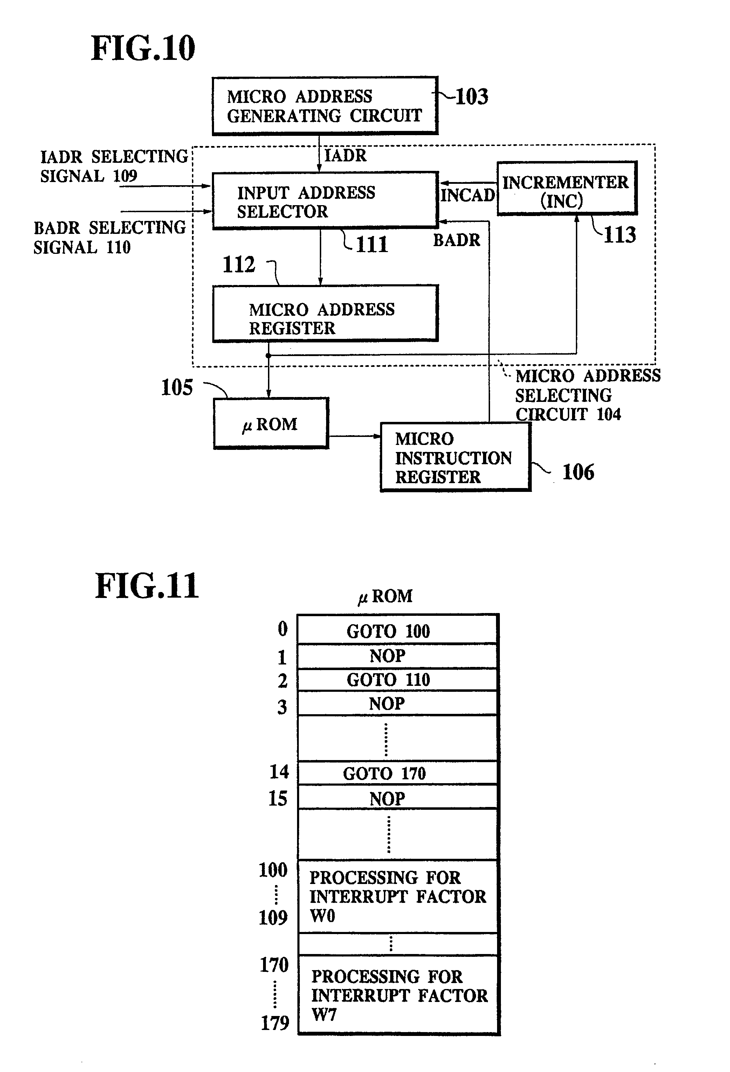

Many kinds of information are stored in the µROM 105. That is, as shown in Fig. 11, 8 instructions are in every other address from the number 0 to 14 so that each, instruction corresponds to one interrupt address IADR, Also, each instruction designates to branch to the corresponding branch address BADR. For example, an instruction stored in an address "0" designates to branch to an address "100" in which a program for processing the interrupt factor W0 is stored. Also, an instruction stored in an address "2" designates to branch to an address "110" in which a program for processing the interrupt factor W1 is stored.

Accordingly, for example, when the interrupt factor W0 has actually occurred, the interrupt address IADR provided from the micro address assigning circuit l02 designates an address "0". The address "0" is identical with the micro address "0" in the µROM 105 in which the instruction for designating to branch to an address "l00" in which a program for processing the interrupt factor W0 which has occurred is stored.

Therefore, a branch address signal BADR is provided to the selector 111 from the micro instruction register 106 after a micro instruction corresponding to the interrupt address IADR is provided to the register 106 from the µROM 105, so that the branch address BADR is provided to the µROM 105 through the micro address register 112. Therefore, information for processing the interrupt factor which has occurred can be read out from the micro address in the µROM 105 designated by the branch address BADR and provided to the register 106. Thereby, the information read out from the µROM l05 is provided to the arithmetic circuit 107 through the register l06 so that the interrupt factor which has occurred is processed in the arithmetic circuit 107 for controlling the processor.

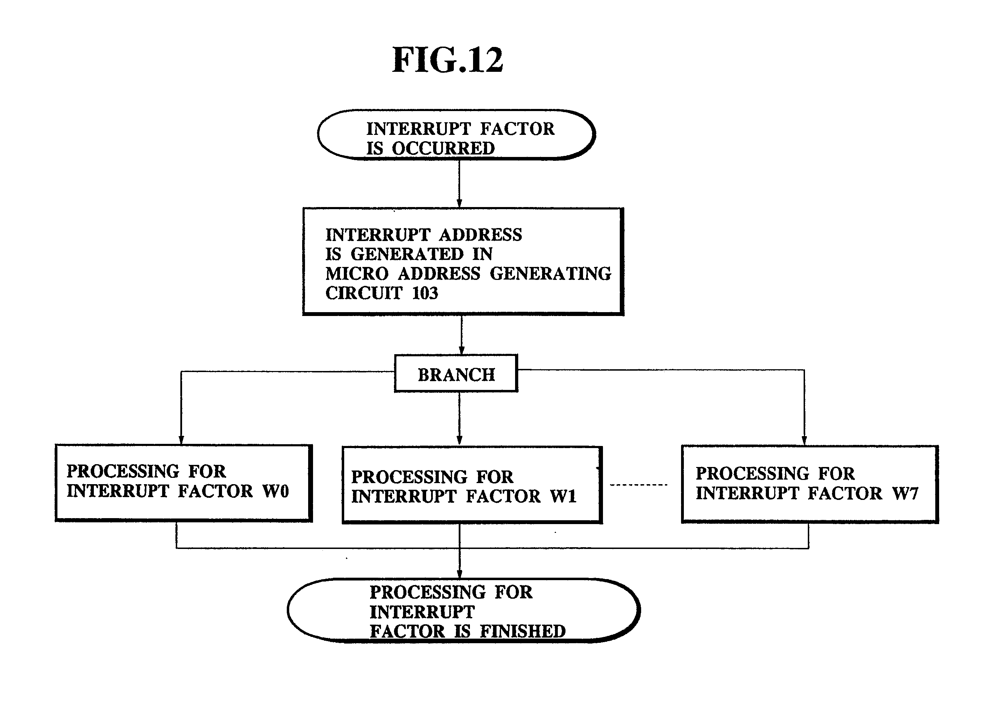

The above mentioned processing is shown in Fig. 12 which is a flow chart illustrating the process flow from the occurrence of the interrupt factor to the processing in the arithmetic circuits 107.

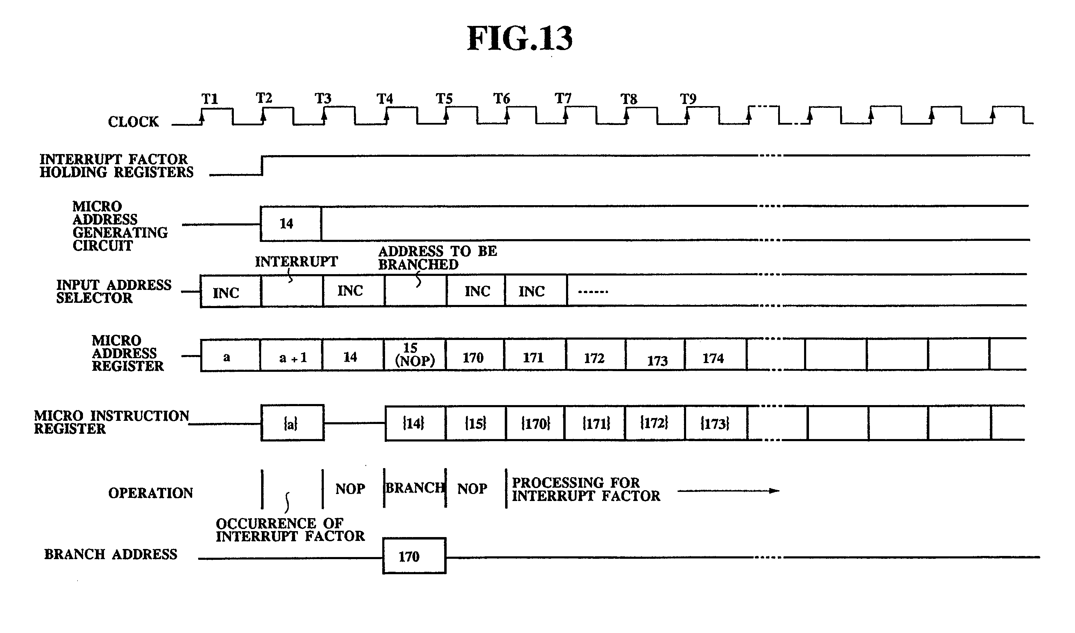

Next, the procedure for processing the interrupt factor W7 is described for estimating the performance with reference to Fig. 13. In this case, the interrupt factor W7 has actually ocurred, while the interrupt factors W0 to W6 do not occur.

Fig. 13 is a timing chart illustrating the processing of the interrupt factor W7 in the microprogram control unit shown in Fig. 6.

In Fig. 13, the order of priority is from the interrupt factor W0 registered in the REG 0 to the interrupt factor W7 registered in the REG 7.

First, when a "l" level detecting signal is registered in the REG 7 of the interrupt factor holding registers 14 at a clock cycle T2, an interrupt address IADR of the address "l4" is immediately provided to the input address selector 111 of the micro address selecting circuit 104 from the micro address generating circuit 103.

Thereafter, the address "l4" which is identical with the interrupt factor IADR corresponding to the interrupt factor W7 is registered in the micro address register 112 from the selector 111 at a clock cycle T3.

Thereafter, a micro instruction (l4) stored in the address "l4" of the µROM 105 is registered in the micro instruction register 106 at a clock cycle T4, thereby a branch address signal BADR is immediately provided to the circuit 104 so that the selector ll1 selects the branch address "170". The reason why the selector l11 selects the address "l70" is that the instruction in the µROM 105 contains the address and the branch instruction.

Thereafter, the branch address "l70" is registered in the register 112 at a clock cycle T5, thereby a program for processing the interrupt factor W7 stored in the address "170" of the µROM 105 is registered to the micro instruction register 106 at a clock cycle T6 and is immediately provided to the arithmetic circuit 107 for controlling the processor.

Therefore, in the microprogram control unit according to the present invention, the interrupt factor W7 which has occurred at the clock cycle T2 is processed at the arithmetic circuits 107 at the clock cycle T7. This means that the interrupt processing can be started after passing only 4 clocks.

Accordingly, in the present invention, it is not necessary to check whether each interrupt factor is actually occurred or not in a prescribed order of priority as mentioned in the conventional micro program control unit. Therefore, the process can be initiated with fewer branch instructions, so that the processing speed is improved.

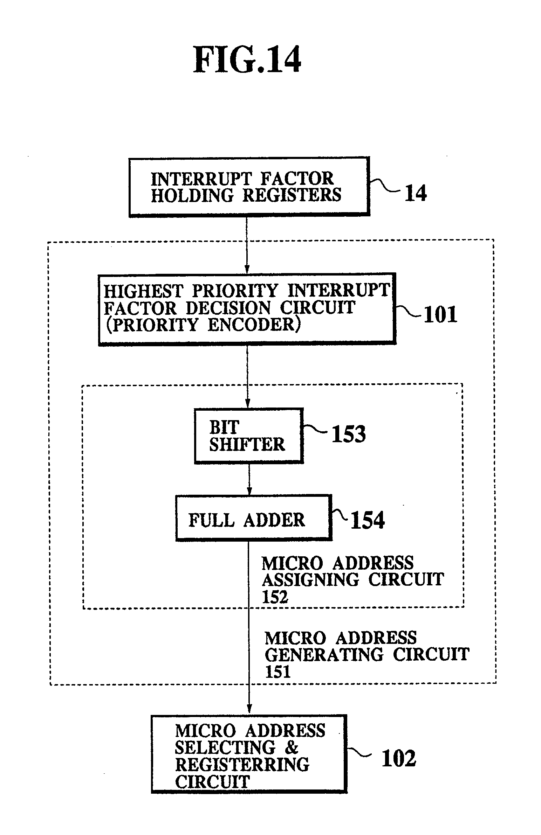

Next, a second modification for a micro address generating circuit is described with reference to Fig. 14.

As shown in Fig. 14, the micro address generating circuit 151 comprises the highest priority interrupt factor decision circuit 101, and a micro address assigning circuit 152 for assigning discontinued micro addresses at regular intervals to the consecutive micro addresses provided from the circuit 101.

The detecting signals registered in the interrupt factor holding registers 14 are provided to the highest priority interrupt factor decision circuit 101.

The micro address assigning circuit 152 comprises;

a bit shifter 153 for shifting 3-bit signal by 5 bits, the signal is provided from the circuit 101 and constituted from consecutive micro addresses; and

a full adder 154 for adding on address value "100" to the shifted signal provided from the bit shifter 153.

In the above structure, the consecutive micro addresses provided from the highest priority interrupt factor decision circuit 101 are designated from the address "0" to "7" and each address is provided to the bit shifter 153. The consecutive micro addresses are the 3-bit signal so that the signal is shifted by 5 bits in the bit shifter 153. Moreover, the shifted signal is provided to the full adder 154 to be added the address value "l00" for a base address and provided to the micro address selecting circuit l02.

The bit value shifted in the bit shifter 153 is changeable. Also, the address value added in the full adder l54 is changeable. Therefore, it is possible to assign prescribed address values every N addresses to the consecutive micro address values by using the bit shifter 153 and the full adder 154.

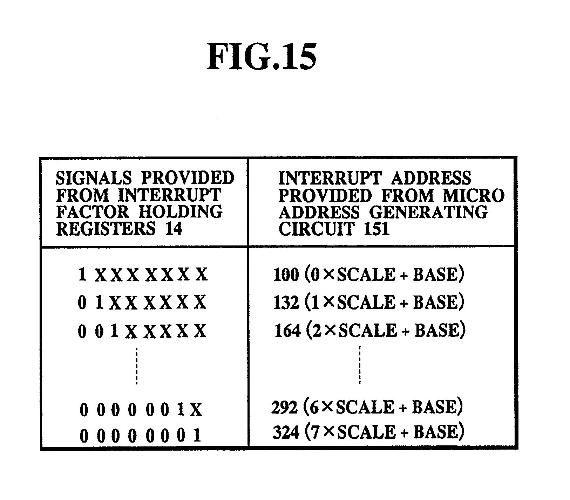

As shown in Fig. 15. "scale" = $2^M$ is generally defined when each micro address is shifted by M bit in the bit shifter 153. Also, "base" is defined as a value added to each shifted address in the full adder 154.

In this embodiment, the "scale" equals 32(= $2^5$ ) address value and the "base" equals 100 address value. For example, when a group of detecting signals registered in the holding registers 14 is "IXXXXXXX" , the address value "l00" is generated in the micro address generating circuit 151 and the following address value is generated every 32 words corresponding to the detecting signals.

Accordingly, as shown in Fig. 11, a NOP command is inserted and stored following an instruction command in the $\mu$ROM l05 in the first modification. Therefore, the NOP command in surely stored in the micro address register 112 following the branch address BADR ( address "15" ) as shown in Fig. 13. However, in the second modification, the program for processing the specific interrupt factor is stored in the micro address register 112 following the corresponding instruction command because enough addresses to store the program can be assigned by the bit shifter l53 between two instruction commands in the $\mu$ROM 105. Therefore, the processing speed for the interrupt factor is faster by 2 clock cycles.

On the other hands, it is inconvenient to store the group of programs because the address area for storing the program is limited in the second modification, while it is convenient to store the group of the program because the address area for storing the program is not limited in the first modification.

Having illustrated and described the principles of our invention in a preferred embodiment thereof, it should be readily apparent to those skilled in the art that the invention can be modified in arrangement and detail without departing from such principles. We claim all modifications coming within the sprit and scope of the accompanying claims.

Reference signs in the claims are intended for better understanding and shall not limit the scope.

## Claims

1. A microprogram control unit for providing a processor control information for processing interrupt factors occurring in a processor, comprising:

a detecting section (13) for detecting a plurality of types of interrupt factors occurring in the processor in a plurality of interrupt factor detecting circuits (13) thereof, each interrupt factor detecting circuit (13) corresponding to one type of interrupt factor;

a plurality of interrupt factor holding registers (l4) for holding detecting signals transmitted from the detecting section (13), each register (14) holding one detecting signal transmitted from the corresponding interrupt factor detecting circuit (13) in the detecting section (13);

a highest priority interrupt factor decision section (101) for deciding a specific interrupt factor which has the highest priority among the interrupt factors corresponding to the detecting signals held in the registers (14) , the order of priority in the interrupt factors being defined in the decision section (101) in advance;

a micro address assigning section (102) for assigning an interrupt microprogram address to the specific interrupt factor determined in the highest priority interrupt factor decision section (101), each interrupt microprogram address being defined in advance corresponding to one interrupt factor; and

an information memory section (104 to 108) for storing a plurality of types of processor control information for processing interrupt factors detected in the detecting section (13) and providing specific information for processing the specific interrupt factor determined in the decision section after receiving the interrupt microprogram address assigned in the assigning section (102).

2. A microprogram control unit according to claim l in which the information storing section includes:

a control storage (105) for storing a plurality of types of processor control information for processing interrupt factors detected in the detecting section (13) and a plurality of types of micro instruction, each piece of information corresponding to one micro instruction;

a micro address selecting section (l04) for

(1) selecting the interrupt microprogram address assigned in the micro address assigning section (102) in the first selecting operation and

(2) providing the interrupt microprogram address to the control storage (105) so that a micro instruction instructing the selecting section (104) to select a branch address in the second selecting operation is read out from the control storage (105), the branch address designating a specific micro address in which the specific information is stored in the control storage (105); and

a micro instruction register (106) for

(1) providing the branch address to the micro address selecting section (104) after receiving the micro instruction from the control storage (105) and

(2) registering the specific information read out from the control storage (105) after having selected the branch address in the selecting section (104) to provide a branch address designating signal which designates the specific information stored in the branch address, the specific information registered in the micro instruction register (106) provided to the outside for controlling the processor.

3. A microprogram control unit according to claim 2 in which the interrupt micro addresses are assigned every other micro address to each other according to the order of priority defined for the interrupt factors in the micro address assigning section (102);

each micro instruction in the control storage (106) is in advance stored in one prescribed address identical with one interrupt micro address assigned corresponding to each interrupt factor; and

each processor control information in the control storage (106) corresponding to each interrupt factor is stored in one prescribed address area in one bundle following all of the micro instructions.

4. A microprogram control unit according to claim 2 in which the interrupt micro addresses are assigned at regular intervals to each other according to the order of priority defined for the interrupt factors in the micro address assigning section (102);

each micro instruction in the control storage (106) is in advance stored in each prescribed address identical with each interrupt micro address assigned corresponding to each interrupt factor; and

each processor control information in the control storage (106) corresponding to one interrupt factor is stored in one prescribed address area in one bundle following one corresponding micro instruction.

5. A microprogram control unit according to claim 1 in which the highest priority interrupt factor decision section (101) comprises a priority encoder.

6. A microprogram control unit according to claim 2 in which the micro address selecting section (104) comprises;

an input address selector (111) for

(1) selecting one interrupt micro address provided from the micro address assigning section (102) after receiving a first selecting signal indicating that one interrupt factor is detected in one detecting section (13) from the interrupt factor holding registers (14) and

(2) selecting on branch address provided from the micro instruction register (106) after receiving a second selecting signal indicating the input address selector to select the branch address from the micro instruction register (106); and

a micro address register (112) for registering the address selected in the input address selector (111) and providing the registered address to the control storage (106).

7. A microprogram control unit according to claim 4 in which the micro address assigning section (102) comprises;

a bit shifter (153) for shifting the signal designating the specific interrupt factor provided from the highest priority interrupt factor decision section (l01) by prescribed bits; and

a full adder (154) for adding a prescribed address value to the shifted signal provided from the bit shifter (153).

8. A microprogram control unit according to claim 2 in which the control storage (106) is a $\mu$ROM.

# FIG.1

INTERRUPT FACTOR DETECTING CIRCUIT

INTERRUPT FACTOR DETECTING CIRCUIT ⌐13 --------

INTERRUPT FACTOR DETECTING CIRCUIT ⌐13

13 ⌐

W0 ↓     W1 ↓     W7 ↓

INTERRUPT FACTOR HOLDING REGISTERS ⌐14

⌐15

BRANCH CONDITION DICISION SIGNAL 19

MICRO INSTRUCTION BRANCH DECISION CIRCUIT ◄──

⌐20

ARITHMETIC CIRCUIT.S

BRANCH SUCCESS SIGNAL 17

BRANCH ADDRESS SIGNAL 18

MICRO INSTRUCTION REGISTER

⌐12

INTERRUPT NOTIFICATION SIGNAL 16

⌐11

MICRO ADDRESS SELECTING CIRCUIT

MICRO ADDRESS SIGNAL

μ ROM

10

# FIG.2

W0    W1    W2    W3    W4    W5    W6    W7

| REG0 | REG1 | REG2 | REG3 | REG4 | REG5 | REG6 | REG7 |

INTERRUPT FACTOR HOLDING REGISTERS 14

EP 0 451 639 A2

# FIG.3

```
        ┌──────────┐
        │  START   │
        └────┬─────┘
             │
          ◇ REG0=1 ◇──YES──►┌─────────────────────┐
             │NO            │ PROCESSING  FOR      │
             │◄────────────│ INTERRUPT            │
             │              │ FACTOR  W0           │
             │              └─────────────────────┘
          ◇ REG1=1 ◇──YES──►┌─────────────────────┐
             │NO            │ PROCESSING  FOR      │
             │◄────────────│ INTERRUPT FACTOR     │
             │              │ W1                   │
             │              └─────────────────────┘
             ⋮
          ◇ REG7=1 ◇──YES──►┌─────────────────────┐
             │NO            │ PROCESSING  FOR      │
             │◄────────────│ INTERRUPT FACTOR     │
             │              │ W7                   │
        ┌────┴─────┐        └─────────────────────┘
        │  FINISH  │
        └──────────┘
```

# FIG.4

$\mu$ ROM

| | |
|---|---|
| 0 | IF (REG0=1) GOTO 100 |
| 1 | NOP |
| 2 | IF (REG1=1) GOTO 110 |
| 3 | NOP |
| | ⋮ |
| 14 | IF (REG7=1) GOTO 170 |
| 15 | NOP |
| | ⋮ |
| 100 ⋮ 109 | PROGRAM FOR PROCESSING INTERRUPT FACTOR W0 |
| | ⋮ |
| 170 ⋮ 179 | PROGRAM FOR PROCESSING INTERRUPT FACTOR W7 |

# FIG.5

EP 0 451 639 A2

# FIG.6

INTERRUPT FACTOR DETECTING CIRCUIT 13

INTERRUPT FACTOR DETECTING CIRCUIT 13

INTERRUPT FACTOR DETECTING CIRCUIT 13

13

W0    W1    W7

INTERRUPT FACTOR HOLDING REGISTERS 14

HIGHEST PRIORITY INTERRUPT FACTOR DECISION CIRCUIT 101

103

MICRO ADDRESS ASSIGNING CIRCUIT 102

MICRO ADDRESS GENERATING CIRCUIT

INTERRUPT ADDRESS IADR

MICRO INSTRUCTION

BRANCH ADDRESS BADR

ARITHMETIC CIRCUITS 107

MICRO INSTRUCTION REGISTER 106

IADR SELECTING SIGNAL 109

MICRO ADDRESS SELECTING & REGISTERRING CIRCUIT 104

BRANCH ADDRESS DESIGNATING SIGNAL

μ ROM 105

BADR SELECTING SIGNAL 110

BADR SELECTING SIGNAL GENERATING CIRCUIT 108

CONTROL SIGNAL

EP 0 451 639 A2

# FIG.7

16

# FIG.8

| INPUT | | | | | | OUTPUT | |
|---|---|---|---|---|---|---|---|

INPUT                              OUTPUT

| IN0 | IN1 | IN2 | IN3 | ·········· | IN15 | OUT0-3 | ALL0 | |
|---|---|---|---|---|---|---|---|---|
| 1 | X | X | X | X ·········· | X | 0 0 0 0 | 0 | ······ ① |
| 0 | 1 | X | X | X ·········· | X | 0 0 0 1 | 0 | ······ ② |
| 0 | 0 | 1 | X | X ·········· | X | 0 0 1 0 | 0 | ······ ③ |
| 0 | 0 | 0 | 1 | X ·········· | X | 0 0 1 1 | 0 | ······ ④ |
| ⋮ | | | | ⋮ | | ⋮ | | |
| 0 | 0 | 0 | 0 | 0 ·········· | 1 | 1 1 1 1 | 0 | ······ ⑤ |
| 0 | 0 | 0 | 0 | 0 ·········· | 0 | 1 1 1 1 | 1 | |

# FIG.9

| INTERRUPT FACTOR | | | | | | | | INTERRUPT ADDRESS |
|---|---|---|---|---|---|---|---|---|
| W0 | W1 | W2 | W3 | W4 | W5 | W6 | W7 | |
| 1 | X | X | X | X | X | X | X | 0 |
| 0 | 1 | X | X | X | X | X | X | 2 |
| 0 | 0 | 1 | X | X | X | X | X | 4 |
| 0 | 0 | 0 | 1 | X | X | X | X | 6 |
| 0 | 0 | 0 | 0 | 1 | X | X | X | 8 |
| 0 | 0 | 0 | 0 | 0 | 1 | X | X | 10 |
| 0 | 0 | 0 | 0 | 0 | 0 | 1 | X | 12 |
| 0 | 0 | 0 | 0 | 0 | 0 | 0 | 1 | 14 |

# FIG.10

```
┌─────────────────────────────┐
│ MICRO ADDRESS               │ ~103
│ GENERATING CIRCUIT          │
└─────────────────────────────┘
                │ IADR
IADR SELECTING ─────▶┌──────────────────┐◀── ┌──────────────────┐
SIGNAL 109           │ INPUT ADDRESS    │INCAD│ INCREMENTER      │
                     │ SELECTOR         │◀────│ (INC)            │
BADR SELECTING ─────▶│                  │     └──────────────────┘
SIGNAL 110           └──────────────────┘           ~113
                       └ 111      BADR
         112 ┐           │
         ┌──────────────────┐
         │ MICRO ADDRESS    │
         │ REGISTER         │
         └──────────────────┘
105 ┐          │
    ┌──────────┐              MICRO ADDRESS
    │ μ ROM    │              SELECTING
    └──────────┘              CIRCUIT 104
                   ┌──────────────────┐
                   │ MICRO            │
                   │ INSTRUCTION      │
                   │ REGISTER         │ ~ 106
                   └──────────────────┘
```

# FIG.11

μ ROM

| | |
|---|---|
| 0 | GOTO 100 |
| 1 | NOP |
| 2 | GOTO 110 |
| 3 | NOP |
| | ⋮ |
| 14 | GOTO 170 |
| 15 | NOP |
| | ⋮ |
| 100 ⋮ 109 | PROCESSING FOR INTERRUPT FACTOR W0 |
| | ⋮ |
| 170 ⋮ 179 | PROCESSING FOR INTERRUPT FACTOR W7 |

18

# FIG.12

```
┌──────────────────────────────┐
│  INTERRUPT  FACTOR           │
│  IS  OCCURRED                │
└──────────────────────────────┘
              │
              ▼
┌──────────────────────────────┐
│  INTERRUPT  ADDRESS          │
│  IS  GENERATED  IN           │
│  MICRO  ADDRESS  GENERATING  │
│  CIRCUIT  103                │
└──────────────────────────────┘
              │
              ▼
         ┌──────────┐
         │  BRANCH  │
         └──────────┘
```

┌───────────────────────┐   ┌───────────────────────┐            ┌───────────────────────┐
│  PROCESSING  FOR      │   │  PROCESSING  FOR      │ ·········· │  PROCESSING  FOR      │
│  INTERRUPT  FACTOR  W0 │   │  INTERRUPT  FACTOR  W1 │            │  INTERRUPT  FACTOR  W7 │
└───────────────────────┘   └───────────────────────┘            └───────────────────────┘

```
       ┌──────────────────────────────┐
       │  PROCESSING  FOR             │
       │  INTERRUPT                   │
       │  FACTOR  IS  FINISHED        │
       └──────────────────────────────┘
```

EP 0 451 639 A2

# FIG.13

CLOCK — T1 T2 T3 T4 T5 T6 T7 T8 T9

INTERRUPT FACTOR
HOLDING REGISTERS

MICRO
ADDRESS
GENERATING
CIRCUIT — 14

INPUT ADDRESS
SELECTOR — INC | INTERRUPT | INC | ADDRESS TO BE BRANCHED | INC | INC | ......

MICRO
ADDRESS
REGISTER — a | a+1 | 14 | 15 (NOP) | 170 | 171 | 172 | 173 | 174

MICRO INSTRUCTION
REGISTER — {a} | {14} | {15} | {170} | {171} | {172} | {173}

OPERATION — NOP | BRANCH | NOP | PROCESSING FOR INTERRUPT FACTOR →

OCCURRENCE OF
INTERRUPT FACTOR

BRANCH ADDRESS — 170

EP 0 451 639 A2

# FIG.14

```
┌─────────────────────────────┐
│  INTERRUPT FACTOR           │
│  HOLDING REGISTERS          │──── 14
└─────────────────────────────┘
              │
              ▼
┌─────────────────────────────┐
│  HIGHEST PRIORITY INTERRUPT │
│  FACTOR DECISION CIRCUIT    │──── 101
│  (PRIORITY ENCODER)         │
└─────────────────────────────┘
              │
              ▼
        ┌──────────┐
        │  BIT     │──── 153
        │  SHIFTER │
        └──────────┘
              │
              ▼
     ┌─────────────────┐
     │  FULL ADDER     │──── 154
     └─────────────────┘

          MICRO ADDRESS
          ASSIGNING CIRCUIT
          152

          MICRO ADDRESS
          GENERATING CIRCUIT
          151
              │
              ▼
┌─────────────────────────────┐
│  MICRO ADDRESS              │
│  SELECTING &                │──── 102
│  REGISTERRING              │
│  CIRCUIT                    │
└─────────────────────────────┘
```

# FIG.15

| SIGNALS PROVIDED FROM INTERRUPT FACTOR HOLDING REGISTERS 14 | INTERRUPT ADDRESS PROVIDED FROM MICRO ADDRESS GENERATING CIRCUIT 151 |
|---|---|
| 1 X X X X X X X | 100 (0 × SCALE + BASE) |
| 0 1 X X X X X X | 132 (1 × SCALE + BASE) |
| 0 0 1 X X X X X | 164 (2 × SCALE + BASE) |
| ⋮ | ⋮ |
| 0 0 0 0 0 0 1 X | 292 (6 × SCALE + BASE) |
| 0 0 0 0 0 0 0 1 | 324 (7 × SCALE + BASE) |